# EUROPÄISCHE PATENTSCHRIFT

(11) **EP 4 458 913 B1**
(45) Veröffentlichungstag und Bekanntmachung des Hinweises auf die Patenterteilung: **14.01.2026**
(21) Anmeldenummer: 23171042.7
(22) Anmeldetag: 02.05.2023
(51) Int. Cl.: C09D 5/00

(54) **TROCKENZUSAMMENSETZUNG ZUR HERSTELLUNG EINER PASTÖSEN BESCHICHTUNGSMASSE, PASTÖSE BESCHICHTUNGSMASSE FÜR EIN AKUSTIKSYSTEM SOWIE AKUSTIKSYSTEM**
DRY COMPOSITION FOR PRODUCING A PASTY COATING MASS, PASTY COATING MASS FOR AN ACOUSTIC SYSTEM AND ACOUSTIC SYSTEM
COMPOSITION SÈCHE POUR LA FABRICATION D'UNE MATIÈRE DE REVÊTEMENT PÂTEUSE, MATIÈRE DE REVÊTEMENT PÂTEUSE POUR UN SYSTÈME ACOUSTIQUE ET SYSTÈME ACOUSTIQUE

(43) Veröffentlichungstag der Anmeldung: 06.11.2024
(73) Patentinhaber: STO SE & Co. KGaA, 79780 Stühlingen (DE)
(72) Erfinder: Kempa, Judith, 79787 Lauchringen (DE); Burger, Marianne, 79780 Stühlingen (DE); Tritschler, Kevin, 77859 Schluchsee (DE)
(74) Vertreter: Gottschalk, Matthias

(56) Entgegenhaltungen:
- WO-A1-2005/056276
- WO-A1-2017/123955
- WO-A2-2010/144798

## Beschreibung

Die Erfindung betrifft eine Trockenzusammensetzung zur Herstellung einer pastösen Beschichtungsmasse zur Ausbildung einer Zwischen- und/oder Deckbeschichtung in einem Akustiksystem. Unter einem Akustiksystem wird vorliegend ein System aus flächig angeordneten Platten, vorzugsweise Akustikplatten, und mindestens einer hierauf angebrachten Beschichtung verstanden, die akustisch aktiv ist, insbesondere schallschluckende Eigenschaften aufweist.

Darüber hinaus betrifft die Erfindung eine pastöse Beschichtungsmasse für ein Akustiksystem, die unter Verwendung einer erfindungsgemäßen Trockenzusammensetzung hergestellt worden ist, sowie ein Akustiksystem mit einer entsprechenden pastösen Beschichtungsmasse.

Bevorzugter Anwendungsbereich der Erfindung sind Innenräume, in denen ein Akustiksystem zur Optimierung der Raumakustik eingesetzt werden soll.

### Stand der Technik

Aus der WO 2010/144798 ist eine akustisch abstimmbare schallabsorbierende Verkleidung mit steuerbarem Luftströmungswiderstand bekannt, wobei die Verkleidung Zellulosefasern und eine Vliesfasermatte umfasst, die miteinander verwoben sind.

Aus der WO 2017/123955 A1 sind eine hydroxyfunktionelle Alkylpolyharnstoff-Vernetzer enthaltende Beschichtungszusammensetzung sowie ein Substrat bekannt, das mit der Beschichtungszusammensetzung beschichtet ist.

Aus der WO 2005/056276 A1 ist eine Pulverbeschichtungszusammensetzung zum Auftragen auf ein Bauteil, insbesondere auf ein Bauteil einer Kolbenbaugruppe, bekannt. Die Zusammensetzung bildet nach dem Aushärten eine abschleifbare Beschichtung aus.

Aus dem Stand der Technik sind ferner Akustiksysteme bekannt, die eine strömungsoffene Akustikplatte, bestehend aus Blähglasgranulat, Mineralwolle oder einem ähnlich porösen Material, sowie eine Beschichtungsmasse zur Ausbildung einer Zwischenschicht und/oder Deckbeschichtung umfassen. Die Beschichtungsmasse sollte die Ausbildung einer Beschichtung ermöglichen, die gute akustische Eigenschaften aufweist. Darüber hinaus sollte die Beschichtungsmasse möglichst einfach zu verarbeiten sein. Idealerweise ist die Beschichtungsmasse maschinell applizierbar, das heißt gut spritzbar. Zudem sollte eine aus der Beschichtungsmasse hergestellte Deckschicht gut schleifbar sein, um eine optisch ansprechende Oberflächengüte zu erzielen.

Allen Anforderungen gerecht zu werden, stellt eine Herausforderung dar. Denn Beschichtungsmassen, die gut spritzbar und schleifbar sind, bilden Deckschichten mit weniger guten akustischen Eigenschaften aus. Umgekehrt gilt das Gleiche, das heißt, dass Beschichtungsmassen zur Ausbildung von Deckschichten mit guten akustischen Eigenschaften in der Regel nicht so gut spritz- und schleifbar sind. Dies ist u. a. darauf zurückzuführen, dass zur Verbesserung der akustischen Eigenschaften den Beschichtungsmassen oftmals offenporige Füllstoffe zugegeben werden, um eine offenporige, schallschluckende Oberfläche zu erzielen. Beim Glätten der auf einen Untergrund aufgebrachten Beschichtungsmasse können die offenporigen Füllstoffe jedoch zu einem Reißen der Oberfläche führen, so dass keine homogene Oberfläche erzielt wird.

Aus dem Stand der Technik bekannte Akustiksysteme mit pastösen Beschichtungsmassen zur Ausbildung einer Deckschicht neigen ferner zur Fugenabzeichnung. Das heißt, dass sich die Plattenfugen der darunterliegenden Akustikplatten durch die Deckschicht hindurch abzeichnen. Auch dies gilt es im Interesse einer optisch ansprechenden Oberfläche zu vermeiden.

Die vorliegende Erfindung ist mit der Aufgabe befasst, die vorstehend genannten Nachteile zu vermeiden oder zumindest zu verringern. Insbesondere sollen die Verarbeitungseigenschaften einer pastösen Beschichtungsmasse zur Ausbildung einer Zwischen- und/oder Deckschicht in einem Akustiksystem verbessert werden, um eine akustisch aktive und zugleich optisch ansprechende Oberfläche zu erzielen.

Zur Lösung der Aufgabe wird die Trockenzusammensetzung mit den Merkmalen des Anspruchs 1 vorgeschlagen. Vorteilhafte Weiterbildungen der Erfindung sind den Unteransprüchen zu entnehmen. Darüber hinaus werden eine pastöse Beschichtungsmasse sowie ein Akustiksystem angegeben, in denen die vorgeschlagene Trockenzusammensetzung zum Einsatz gelangt.

### Offenbarung der Erfindung

Vorgeschlagen wird eine Trockenzusammensetzung zur Herstellung einer pastösen Beschichtungsmasse zur Ausbildung einer Zwischen- und/oder Deckbeschichtung in einem Akustiksystem. Die vorgeschlagene Trockenzusammensetzung enthält sandige und/oder körnige Füllstoffe, mindestens ein organisches Polymerbindemittel, Schaumbildner, Rheologieadditive, insbesondere Verdicker, mindestens ein quellbares Polymer sowie übliche Additive.

Durch Zugabe von Wasser kann aus der vorgeschlagenen Trockenzusammensetzung eine pastöse Beschichtungsmasse hergestellt werden. Vorzugsweise muss nur noch Wasser zugegeben werden, um die gewünschte pastöse Beschichtungsmasse herzustellen. Der Vorteil der Trockenzusammensetzung gegenüber einer bereits angemachten, verarbeitungsfertigen Beschichtungsmasse besteht insbesondere darin, dass die Trockenzusammensetzung gut lagerbar ist und somit eine konservierungsmittelfreie Formulierung ermöglicht. Da Anmachwasser fehlt, weist die Trockenzusammensetzung zudem ein geringes Gewicht auf, so dass der Transport vereinfacht wird. Die Trockenzusammensetzung kann zudem in einfachen Säcken gelagert und/oder transportiert werden, so dass die Verpackung - im Unterschied zu den sonst üblichen Kunststoffgebinden pastöser Beschichtungsmassen - nachhaltiger und umweltfreundlicher ist.

Die vorgeschlagene Trockenzusammensetzung ermöglicht die Herstellung einer pastösen Beschichtungsmasse, die besonders verarbeitungsfreundlich, insbesondere gut spritzbar und schleifbar, ist. Das heißt, dass die pastöse Beschichtungsmasse auch sehr gut maschinell appliziert werden kann. Bei normaler Deckenhöhe kann die Applikation vom Boden aus vorgenommen werden, so dass ein Gerüst entfallen kann. Die applizierte Beschichtungsmasse wirkt zudem fugenfüllend und nivellierend, so dass es weniger zu unerwünschten Fugenabzeichnungen kommt. Aufgrund der fugenfüllenden Eigenschaften kann die Beschichtungsmasse auch zum Ausbessern kleinerer Plattenschäden eingesetzt werden.

Die guten Verarbeitungseigenschaften einer aus der Trockenzusammensetzung hergestellten pastösen Beschichtungsmasse sind u. a. auf das enthaltene quellbare Polymer zurückzuführen, das superabsorbierende Eigenschaften aufweist und als "Superabsorber" hinlänglich bekannt ist. Das quellbare Polymer verleiht der pastösen Beschichtungsmasse eine gewisse Geschmeidigkeit. Die Beschichtungsmasse kann dadurch nicht nur sehr leicht durch Spritzen appliziert werden, sondern weist auch eine lange Top- bzw. Bearbeitungszeit auf. Nach der Applikation kann die Beschichtungsmasse sehr leicht geglättet werden, so dass eine sehr feine und glatte Oberfläche entsteht. Im getrockneten Zustand lassen sich die Superabsorber-Partikel zudem sehr leicht schleifen.

Die guten Verarbeitungseigenschaften einer aus der Trockenzusammensetzung hergestellten pastösen Beschichtungsmasse sind u. a. auch auf die enthaltenen Rheologieadditive, insbesondere Verdicker, zurückzuführen. Denn diese wirken wasserrückhaltend und leisten damit ebenfalls einen Beitrag zur Geschmeidigkeit der aus der Trockenzusammensetzung hergestellten pastösen Beschichtungsmasse. Darüber hinaus wirken die Rheologieadditive aber auch schaumbildend und schaumstabilisierend. Eine Schaumbildung ist ausdrücklich erwünscht, da Schaum aus einer Vielzahl an Luftblasen besteht, die nach dem Trocknen der Beschichtungsmasse zur Ausbildung einer Porenstruktur führen, die sogar nach dem Schleifen der Oberfläche noch vorhanden ist. Die Porenstruktur wiederum verbessert die akustischen Eigenschaften der aus der Beschichtungsmasse hergestellten Zwischen- und/oder Deckschicht.

Um diesen Effekt zu verstärken, ist in der vorgeschlagen Trockenzusammensetzung ferner ein Schaumbildner enthalten.

Bevorzugt sind in der vorgeschlagenen Trockenzusammensetzung anionische und/oder nichtionische Tenside als Schaumbildner enthalten. Damit konnten in Versuchen sehr gute Ergebnisse erzielt werden. Ferner bevorzugt sind anionische Tenside auf Basis von Fettsäurederivaten, beispielsweise Laurylethersulfate oder Oleinsulfonate, enthalten. Als nichtionische Tenside können insbesondere Fettalkoholethoxylate enthalten sein.

Des Weiteren bevorzugt sind in der vorgeschlagenen Trockenzusammensetzung 0,02 bis 0,5 Gew.-%, vorzugsweise 0,02 bis 0,3 Gew.-%, weiterhin vorzugsweise 0,04 bis 0,1 Gew.-% der Schaumbildner bezogen auf das Gesamtgewicht der Ausgangsstoffe enthalten.

Darüber hinaus sind bevorzugt schaumbildende Verdicker, insbesondere Celluloseether, und/oder schaumstabilisierende Verdicker, insbesondere Polyacrylamid, als Rheologieadditive enthalten. Idealerweise werden schaumbildende Verdicker und schaumstabilisierende Verdicker in Kombination eingesetzt. Als besonderes wirksam hat sich die Kombination aus Celluloseether und Polyacrylamid erwiesen, wobei die schaumstabilisierende Wirkung von Polyacrylamid eine Überraschung darstellte.

Bevorzugt sind in der vorgeschlagenen Zusammensetzung 0,05 bis 1,0 Gew.-%, vorzugsweise 0,1 bis 0,6 Gew.-%, weiterhin vorzugsweise 0,1 bis 0,4 Gew.-% der Rheologieadditive bezogen auf das Gesamtgewicht der Ausgangsstoffe enthalten.

Da die Schaumbildung in einer aus der Trockenzusammensetzung hergestellten Beschichtungsmasse zur Verbesserung der Akustikwerte einer aus der Beschichtungsmasse ausgebildeten Zwischen- und/oder Deckschicht ausdrücklich erwünscht ist, wird kein Entschäumer zugegeben. Denn dieser würde die Schaumbildung erschweren oder sogar gänzlich verhindern. Die vorgeschlagene Trockenzusammensetzung ist demnach bevorzugt frei von Entschäumern.

Einen gewissen Beitrag zur Porenbildung und damit zu einer Optimierung der akustischen Eigenschaften einer Zwischen- und/oder Deckschicht, die unter Verwendung der vorgeschlagenen Trockenzusammensetzung ausgebildet worden ist, leistet auch das mindestens eine in der Trockenzusammensetzung enthaltene quellbare Polymer. Zwar besteht die Hauptaufgabe des quellbaren Polymers bzw. Superabsorbers darin, Wasser aufzunehmen und zu quellen, um die Verarbeitungseigenschaften einer aus der Trockenzusammensetzung hergestellten pastösen Beschichtungsmasse zu verbessern. Auf das Quellen folgt jedoch das Schwinden der Polymerpartikel während der Trocknungsphase, was dazu führt, dass in der Zwischen- und/oder Deckschicht Hohlräume verbleiben, die schallschluckend wirken.

In der vorgeschlagenen Trockenzusammensetzung ist bevorzugt ein vernetztes Polymer auf Acrylatbasis als das mindestens eine quellbare Polymer enthalten. Beispielsweise können vernetzte, partielle Natriumsalze von Polyacrylsäure als quellbares Polymer bzw. Superabsorber enthalten sein.

Bevorzugt wird ein quellbares Polymer verwendet, dessen Partikel im trockenen Zustand eine mittlere Partikelgröße (D50) < 300 µm, vorzugsweise < 200 µm, weiterhin vorzugsweise < 150 µm aufweisen. Die Partikelgröße kann durch Siebanalyse nach DIN 66165-1:2016-08 ermittelt werden. In der Regel kann die Partikelgröße aber auch einem technischen Datenblatt entnommen werden. Das quellbare Polymer sollte zudem einen Quellfaktor von mindestens 20 nach 1 Minute in deionisiertem Wasser aufweisen.

Bevorzugt sind 0,05 bis 2,5 Gew.-%, vorzugsweise 0,1 bis 2,0 Gew.-%, weiterhin vorzugsweise 0,1 bis 1,0 Gew.-% des mindestens einen quellbaren Polymers bezogen auf das Gesamtgewicht der Ausgangsstoffe in der Trockenzusammensetzung enthalten.

Die ferner in der vorgeschlagenen Zusammensetzung enthaltenen sandigen und /oder körnigen Füllstoffe sind vorzugsweise aus der Gruppe der silikatischen, karbonatischen, oxidischen, hydroxidischen und/oder sulfatischen Füllstoffe gewählt. Beispielsweise können sandige und/oder körnige Füllstoffe aus Quarz, Cristobalit, Talkum, Kalkstein, Marmor, Dolomit, Aluminiumhydroxid und/oder Erdalkalisulfate enthalten sein.

Alternativ oder ergänzend wird vorgeschlagen, dass Leichtfüllstoffe als sandige und/oder körnige Füllstoffe enthalten sind, beispielsweise Bims, Perlit, insbesondere expandierter Perlit, expandiertes Glas, Blähglas, Blähton, Blähschiefer, Blähglimmer, geblähtes oder geschäumtes Vermiculit, und/oder Hohlglaskugeln.

Die enthaltenen sandigen und/oder körnigen Füllstoffe weisen bevorzugt eine offenporige Oberfläche auf, so dass sie schallschluckende Eigenschaften besitzen.

Ferner bevorzugt sind die sandigen und/oder körnigen Füllstoffe hydrophob bzw. hydrophob eingestellt. Je weniger Wasser die Füllstoffe nach dem Anmachen der Trockenzusammensetzung aufsaugen, desto besser sind die Verarbeitungseigenschaften der aus der Trockenzusammensetzung hergestellten porösen Beschichtungsmasse. Mit hydrophoben bzw. hydrophob eingestellten Leichtfüllstoffen konnten die besten Ergebnisse erzielt werden.

Die mittlere Partikelgröße D50 der enthaltenen sandigen und/oder körnigen Füllstoffe beträgt bevorzugt 100 bis 500 µm, vorzugsweise 200 bis 500 µm, weiterhin vorzugsweise 250 bis 450 µm. Auf die Zugabe von Fein- und/oder Feinstfüllstoffe, insbesondere solche, die eine mittlere Partikelgröße < 30 µm aufweisen, wird vorzugsweise verzichtet. Denn diese können sich in die offenen Poren bzw. Hohlräume setzen und auf diese Weise die guten akustischen Eigenschaften einer unter Verwendung der Trockenzusammensetzung hergestellten Zwischen- und/oder Deckschicht beeinträchtigen.

Der D50-Wert, der auch Halbwertskorngröße oder Medianwert genannt wird, gibt die mittlere Partikelgröße eines Füllstoffs an, so dass der Anteil der Partikel, die größer als der D50-Wert sind, gleich dem Anteil der Partikel ist, die kleiner als der D50-Wert sind. Die Bestimmung dieser Werte erfolgt bevorzugt nach DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2: Berechnungen von mittleren Partikelgrößen/- durchmessern und Momenten aus Partikelgrößenverteilungen). Dabei kann der Mastersizer 3000 der Firma Malvern Instruments Limited als Instrument zur Größenbestimmung eingesetzt werden. In der Regel können diese Werte aber auch einfach einem technischen Datenblatt entnommen werden.

Die erfindungsgemäßen Zusammensetzungen sind in besonders zweckmäßigen Ausgestaltungen mit sandigen und/oder körnigen Füllstoffen mit einer Korngröße im Bereich von größer 0,1 mm bis 1,0 mm, bevorzugt im Bereich von 0,15 mm bis 0,8 mm, noch bevorzugter im Bereich von 0,2 mm bis 0,6 mm jeweils ermittelt durch Siebanalyse gemäß DIN 66165-1:2016-08, ausgestattet.

Die enthaltenen sandigen und/oder körnigen Füllstoffe weisen bevorzugt eine Kornrohdichte nach DIN EN 1097-6 (Verfahren C) auf, die < 800 kg/m³, vorzugsweise < 600 kg/m³, weiterhin vorzugsweise < 500 kg/m³ beträgt. Enthaltene Leichtfüllstoffe weisen bevorzugt eine Schüttdichte < 600 kg/m³, vorzugsweise < 500 kg/m³, weiterhin vorzugsweise < 400kg/m³, auf. Die Schüttdichte von Leichtfüllstoffen kann gemäß dem Fachbuch "Füllstoffe" von Detlef Gysau, 2. Auflage, Seiten 75 und 76, mit Hilfe der Norm ISO 697 ermittelt werden.

In der vorgeschlagenen Trockenzusammensetzung sind bevorzugt 60,0 bis 90,0 Gew.-%, vorzugsweise 70,0 bis 85,0 Gew.-%, weiterhin vorzugsweise 75,0 bis 85,0 Gew.-% der sandigen und/oder körnigen Füllstoffe bezogen auf das Gesamtgewicht der Ausgangsstoffe enthalten.

Die vorgeschlagene Trockenzusammensetzung enthält darüber hinaus mindestens ein organisches Polymerbindemittel, und zwar in Pulverform. Das Bindemittel gewährleistet die mechanische Festigkeit einer unter Verwendung der Trockenzusammensetzung ausgebildeten Zwischen- und/oder Deckschicht.

Bevorzugt ist das mindestens eine organische Polymerbindemittel aus der Gruppe bestehend aus Vinylacetat/Ethylen-Copolymeren, Copolymeren auf Basis von Vinylaromaten, insbesondere gebildet aus Styrol und (Meth)acrylaten, Copolymeren auf Basis von Versaticsäurevinylestern, Copolymeren auf Basis von Acrylaten und ggf. Methacrylaten, insbesondere Reinacrylate, gewählt. Reinacrylate umfassen Homo- und insbesondere Copolymere von (Meth)acrylaten, das heißt Acrylaten und/oder Methacrylaten, ggf. auch mit (Meth)acrylsäure, das heißt Acryl- und/oder Methacrylsäure, als Comonomerbausteine. Bevorzugt gelangen demnach organische Polymerbindemittel zum Einsatz, bei denen die in Wasser dispergierbaren Polymere aus gleichen oder verschiedenen Monomeren gebildet sind, wobei mindestens eines der Monomere ein Acrylsäureester, Methacrylsäureester, Acrylsäure, Methacrylsäure, Vinylacetat, Vinylchlorid, Versatat, Acrylnitril oder eine vinylaromatische Verbindung darstellt. Besonders bevorzugt werden organische Polymerbindemittel auf Basis von Vinylacetat/Ethylen-Copolymeren und Copolymeren auf Basis von Versaticsäurevinylestern.

In der vorgeschlagenen Zusammensetzung sind bevorzugt 5,0 bis 20,0 Gew.-%, vorzugsweise 8,0-16,0 Gew.-%, weiterhin vorzugsweise 8,0 bis 14,0 Gew.-% des mindestens einen organischen Polymerbindemittels bezogen auf das Gesamtgewicht der Ausgangsstoffe enthalten.

Des Weiteren können Pigmente und/oder Flammschutzmittel in der vorgeschlagenen Zusammensetzung enthalten sein. Mittels der Pigmente kann die Farbgebung der unter Verwendung der Trockenzusammensetzung ausgebildeten Zwischen- und/oder Deckschicht vorgegeben werden. Flammschutzmittel, wie beispielsweise Aluminiumhydroxid oder Kristallwasser enthaltende Flammschutzmittel, verbessern den Brandschutz. Da Pigmente und Flammschutzmittel üblicherweise eine mittlere Korngröße D50 < 30 µm aufweisen, verhalten sie sich wie Fein- oder Feinstfüllstoffe. Der Anteil an Pigmenten und/oder Flammschutzmitteln beträgt daher bevorzugt maximal 20 Gew.-%, vorzugsweise maximal 15 Gew.-%, weiterhin vorzugsweise maximal 10 Gew.-%, bezogen auf das Gesamtgewicht der Ausgangsstoffe.

Ferner können weitere Additive, beispielsweise Konservierungsmittel, Netz-/Dispergiermittel, Hydrophobierungsmittel und/oder Fasern, enthalten sein. Der Anteil beträgt vorzugsweise maximal 5,0 Gew.-% bezogen auf das Gesamtgewicht der Ausgangsstoffe.

In der vorgeschlagenen Trockenzusammensetzung können demnach insbesondere die folgenden Ausgangsstoffe in den jeweils angegebenen Gewichtsanteilen enthalten sein:

| | | |
|---|---|---|
| 60,00 - 90,00 | Gew.-% | sandige und/oder körnige Füllstoffe |
| 5,00 - 20,00 | Gew.-% | organisches Polymerbindemittel (Feststoff) |
| 0,02 - 0,50 | Gew.-% | Schaumbildner |
| 0,50 - 1,00 | Gew.-% | Rheologieadditive, insbesondere Verdicker |
| 0,05 - 2,50 | Gew.-% | quellbares Polymer |
| 0,00 - 20,00 | Gew.-% | Pigmente und/oder Flammschutzmittel |
| 0,00 - 5,00 | Gew.-% | weitere Additive |

Darüber hinaus wird eine pastöse Beschichtungsmasse zur Ausbildung einer Zwischen- oder Deckbeschichtung in einem Akustiksystem vorgeschlagen, wobei die pastöse Beschichtungsmasse eine erfindungsgemäße Trockenzusammensetzung sowie Wasser enthält. Das Wasser dient dem Anmachen der Trockenzusammensetzung. Mit dem Anmachen entsteht eine verarbeitungsfertige pastöse Beschichtungsmasse. Die vorgeschlagene pastöse Beschichtungsmasse weist aufgrund der enthaltenen erfindungsgemäßen Trockenzusammensetzung sehr gute Verarbeitungseigenschaften auf. Sie lässt sich gut maschinell applizieren bzw. spritzen. Nach der Applikation und dem Trocknen kann die Beschichtungsmasse bzw. die hieraus ausgebildete Zwischen- und/oder Deckschicht gut geschliffen werden, so dass eine optisch ansprechende Oberfläche ausgebildet wird, die selbst nach dem Schleifen noch offene und damit schallschluckende Poren enthält.

Bezogen auf das Gesamtgewicht der Ausgangsstoffe der pastösen Beschichtungsmasse sind vorzugsweise 35 bis 60 Gew.-%, weiterhin vorzugsweise 40 bis 55 Gew.-%, Wasser enthalten, um optimale Verarbeitungseigenschaften zu erzielen.

Da die erfindungsgemäße Trockenzusammensetzung bevorzugt in Akustiksystemen zum Einsatz gelangt, wird ferner ein Akustiksystem, umfassend mindestens eine Platte, insbesondere eine Akustikplatte, sowie eine erfindungsgemäße Trockenzusammensetzung angegeben. Unter einer Akustikplatte wird vorliegend eine Platte verstanden, die akustisch aktiv, insbesondere strömungsoffen und damit schallabsorbierend, ist. Die Platte kann beispielsweise aus Blähglasgranulat, Mineralwolle oder einem ähnlich porösen Material hergestellt sein. Hierauf wird die mit Wasser angemachte Trockenzusammensetzung bzw. die hieraus hergestellte pastöse Beschichtungsmasse zur Ausbildung einer Zwischen- und/oder Deckschicht aufgebracht. Sofern die pastöse Beschichtungsmasse lediglich der Ausbildung einer Zwischenschicht dient, kann darauf eine Farb- oder Putzbeschichtung als dekorative und ggf. funktionale Deckbeschichtung aufgebracht werden.

Nachfolgend wird eine bevorzugte Formulierung einer erfindungsgemäßen Trockenzusammensetzung zur Herstellung einer pastösen Beschichtungsmasse angegeben, die zur Ausbildung einer Zwischen- und/oder Deckschicht in einem Akustiksystem geeignet ist:

### Trockenzusammensetzung

| | | |
|---|---|---|
| 80,00 | Gew.-% | Blähglasgranulat |
| 10,00 | Gew.-% | organisches Polymerbindemittel (Feststoff) |
| 0,10 | Gew.-% | Schaumbildner |
| 0,15 | Gew.-% | Celluloseether |
| 0,10 | Gew.-% | Polyacrylamid |
| 0,50 | Gew.-% | quellbares Polymer |
| 9,15 | Gew.-% | weitere Additive, insbesondere Aluminiumtrihydroxid als Flammschutzmittel |
| 100,00 | Gew.-% | |

Zur Ausbildung von mehreren Probenkörpern wurden jeweils 4,12 kg der Trockenzusammensetzung mit 3,5 kg Wasser angemacht. Die derart erhaltenen pastösen Beschichtungsmassen wurden dann jeweils in einer Schichtstärke von 1 bis 2 mm auf eine 25 mm dicke Platte aus Blähglasgranulat aufgebracht. Das Aufbringen erfolgte zum einen durch manuelles Aufziehen, zum anderen maschinell durch Spritzen, um die Verarbeitungseigenschaften, insbesondere hinsichtlich Nasshaftung, Spritzbarkeit, Rückpralleigenschaften, Glättbarkeit, Schleifbarkeit und Trockenhaftung, zu testen. Zum Vergleich wurden mit herkömmlichen Akustikbeschichtungen die gleichen Tests durchgeführt und dann bewertet, wobei die Bewertung auf subjektiver Beurteilung beruht. Im Durchschnitt wurden die vorstehend genannten Verarbeitungseigenschaften der Beschichtungsmassen, die aus der erfindungsgemäßen Trockenzusammensetzung hergestellt wurden, jeweils um ein bis zwei Schulnoten besser bewertet als die der herkömmlichen Beschichtungsmassen.

Darüber hinaus wurden die akustischen Eigenschaften der hergestellten Beschichtungen mittels Messung des Schallabsorptionsgrads nach ISO 10534-2 im Impedanzrohr getestet. Auch hier erzielten die Beschichtungen, die aus der erfindungsgemäßen Trockenzusammensetzung hergestellt wurden, bessere Werte als vergleichbare Akustikbeschichtungen.

## Patentansprüche

1. Trockenzusammensetzung zur Herstellung einer pastösen Beschichtungsmasse zur Ausbildung einer Zwischen- und/oder Deckbeschichtung in einem Akustiksystem, enthaltend sandige und/oder körnige Füllstoffe, mindestens ein organisches Polymerbindemittel, Schaumbildner, Rheologieadditive, insbesondere Verdicker, mindestens ein quellbares Polymer sowie übliche Additive.

2. Trockenzusammensetzung nach Anspruch 1,
**dadurch gekennzeichnet, dass** anionische Tenside, vorzugsweise auf Basis von Fettsäurederivaten, beispielsweise Laurylethersulfate oder Oleinsulfonate, und/oder nichtionische Tenside, vorzugsweise Fettalkoholethoxylate, als Schaumbildner enthalten sind.

3. Trockenzusammensetzung nach Anspruch 1 oder 2,
**dadurch gekennzeichnet, dass** 0,02 bis 0,5 Gew.-%, vorzugsweise 0,02 bis 0,3 Gew.-%, weiterhin vorzugsweise 0,04 bis 0,1 Gew.-% der Schaumbildner bezogen auf das Gesamtgewicht der Ausgangsstoffe enthalten sind.

4. Trockenzusammensetzung nach einem der vorhergehenden Ansprüche,
**dadurch gekennzeichnet, dass** schaumbildende Verdicker, insbesondere Celluloseether, und/oder schaumstabilisierende Verdicker, insbesondere Polyacrylamid, als Rheologieadditive enthalten sind.

5. Trockenzusammensetzung nach einem der vorhergehenden Ansprüche,
**dadurch gekennzeichnet, dass** 0,05 bis 1,0 Gew.-%, vorzugsweise 0,1 bis 0,6 Gew.-%, weiterhin vorzugsweise 0,1 bis 0,4 Gew.-% der Rheologieadditive bezogen auf das Gesamtgewicht der Ausgangsstoffe enthalten sind.

6. Trockenzusammensetzung nach einem der vorhergehenden Ansprüche,
**dadurch gekennzeichnet, dass** die Trockenzusammensetzung frei von Entschäumern ist.

7. Trockenzusammensetzung nach einem der vorhergehenden Ansprüche,
**dadurch gekennzeichnet, dass** ein vernetztes Polymer auf Acrylatbasis, vorzugsweise vernetzte, partielle Natriumsalze von Polyacrylsäure, als das mindestens eine quellbare Polymer enthalten ist.

8. Trockenzusammensetzung nach einem der vorhergehenden Ansprüche,
**dadurch gekennzeichnet, dass** 0,05 bis 2,5 Gew.-%, vorzugsweise 0,1 bis 2,0 Gew.-%, weiterhin vorzugsweise 0,1 bis 1,0 Gew.-% des mindestens einen quellbaren Polymers bezogen auf das Gesamtgewicht der Ausgangsstoffe enthalten sind.

9. Trockenzusammensetzung nach einem der vorhergehenden Ansprüche,
**dadurch gekennzeichnet, dass** die sandigen und/oder körnigen Füllstoffe aus der Gruppe der silikatischen, karbonatischen, oxidischen, hydroxidischen und/oder sulfatischen Füllstoffe gewählt sind und/oder Leichtfüllstoffe als sandige und/oder körnige Füllstoffe enthalten sind.

10. Trockenzusammensetzung nach einem der vorhergehenden Ansprüche,
**dadurch gekennzeichnet, dass** die sandigen und/oder körnigen Füllstoffe eine offenporige Oberfläche aufweisen und/oder hydrophob bzw. hydrophob eingestellt sind.

11. Trockenzusammensetzung nach einem der vorhergehenden Ansprüche,
**dadurch gekennzeichnet, dass** die mittlere Partikelgröße D50 der enthaltenen sandigen und/oder körnigen Füllstoffe 100 bis 500 µm, vorzugsweise 200 bis 500 µm, weiterhin vorzugsweise 250 bis 450 µm, beträgt.

12. Trockenzusammensetzung nach einem der vorhergehenden Ansprüche,
**dadurch gekennzeichnet, dass** 60,0 bis 90,0 Gew.-%, vorzugsweise 70,0 bis 85,0 Gew.-%, weiterhin vorzugsweise 75,0 bis 85,0 Gew.-% der sandigen und/oder körnigen Füllstoffe bezogen auf das Gesamtgewicht der Ausgangsstoffe enthalten sind.

13. Trockenzusammensetzung nach einem der vorhergehenden Ansprüche,
**dadurch gekennzeichnet, dass** das mindestens eine organische Polymerbindemittel aus der Gruppe bestehend aus Vinylacetat/EthylenCopolymeren, Copolymeren auf Basis von Vinylaromaten, insbesondere gebildet aus Styrol und (Meth)acrylaten, Copolymeren auf Basis von Versaticsäurevinylestern, Copolymeren auf Basis von Acrylaten und ggf. Methacrylaten, insbesondere Reinacrylate, gewählt ist.

14. Trockenzusammensetzung nach einem der vorhergehenden Ansprüche,
**dadurch gekennzeichnet, dass** 5,0 bis 20,0 Gew.-%, vorzugsweise 8,0-16,0 Gew.-%, weiterhin vorzugsweise 8,0 bis 14,0 Gew.-% des mindestens einen organischen Polymerbindemittels bezogen auf das Gesamtgewicht der Ausgangsstoffe enthalten sind.

15. Trockenzusammensetzung nach einem der vorhergehenden Ansprüche,
**dadurch gekennzeichnet, dass** Pigmente und/oder Flammschutzmittel enthalten sind, wobei der Anteil maximal 20 Gew.-%, vorzugsweise maximal 15 Gew.-%, weiterhin vorzugsweise maximal 10 Gew.-%, bezogen auf das Gesamtgewicht der Ausgangsstoffe beträgt.

16. Trockenzusammensetzung nach einem der vorhergehenden Ansprüche,
**dadurch gekennzeichnet, dass** weitere Additive, beispielsweise Konservierungsmittel, Netz-/Dispergiermittel, Hydrophobierungsmittel und/oder Fasern, enthalten sind, wobei der Anteil maximal 5,0 Gew.-% bezogen auf das Gesamtgewicht der Ausgangsstoffe beträgt.

17. Pastöse Beschichtungsmasse zur Ausbildung einer Zwischen- und/oder Deckbeschichtung in einem Akustiksystem, enthaltend eine Trockenzusammensetzung nach einem der vorhergehenden Ansprüche sowie Wasser.

18. Akustiksystem, umfassend mindestens eine Platte, insbesondere Akustikplatte, sowie eine Trockenzusammensetzung nach einem der Ansprüche 1 bis 16.

## Claims

1. A dry composition for producing a pasty coating composition for forming an intermediate and/or finishing coat in an acoustic system, containing sandy and/or granular fillers, at least one organic polymer binder, foam-forming agents, rheological additives, in particular thickeners, at least one swellable polymer as well as conventional additives.

2. The dry composition as claimed in claim 1,
**characterized in that** it contains anionic surfactants, preferably based on fatty acid derivatives, for example lauryl ether sulphates or oleic sulphonates, and/or non-ionic surfactants, preferably fatty alcohol ethoxylates, as foam-forming agents.

3. The dry composition as claimed in claim 1 or 2,
**characterized in that** it contains 0.02 to 0.5 % by weight, preferably 0.02 to 0.3 % by weight, more preferably 0.04 to 0.1 % by weight of the foam-forming agents, with respect to the total weight of the starting materials.

4. The dry composition as claimed in one of the preceding claims,
**characterized in that** it contains foam-forming thickeners, in particular cellulose ethers, and/or foam-stabilizing thickeners, in particular polyacrylamide, as rheological additives.

5. The dry composition as claimed in one of the preceding claims,
**characterized in that** it contains 0.05 to 1.0 % by weight, preferably 0.1 to 0.6 % by weight, more preferably 0.1 to 0.4 % by weight of the rheological additives, with respect to the total weight of the starting materials.

6. The dry composition as claimed in one of the preceding claims,
**characterized in that** the dry composition is free from defoaming agents.

7. The dry composition as claimed in one of the preceding claims,
**characterized in that** it contains a crosslinked acrylate-based polymer, preferably crosslinked partial sodium salts of polyacrylic acid, as the at least one swellable polymer.

8. The dry composition as claimed in one of the preceding claims,
**characterized in that** it contains 0.05 to 2.5 % by weight, preferably 0.1 to 2.0 % by weight, more preferably 0.1 to 1.0 % by weight of the at least one swellable polymer, with respect to the total weight of the starting materials.

9. The dry composition as claimed in one of the preceding claims,
**characterized in that** the sandy and/or granular fillers are selected from the group of silicate-based, carbonate-based, oxide-based, hydroxide-based and/or sulphate-based fillers and/or contain lightweight fillers as the sandy and/or granular fillers.

10. The dry composition as claimed in one of the preceding claims,
**characterized in that** the sandy and/or granular fillers have an open-pored surface and/or are hydrophobic or are rendered hydrophobic.

11. The dry composition as claimed in one of the preceding claims,
**characterized in that** the mean particle size D50 of the sandy and/or granular fillers contained therein is 100 to 500 µm, preferably 200 to 500 µm, more preferably 250 to 450 µm.

12. The dry composition as claimed in one of the preceding claims,
**characterized in that** it contains 60.0 to 90.0 % by weight, preferably 70.0 to 85.0 % by weight, more preferably 75.0 to 85.0 % by weight of the sandy and/or granular fillers, with respect to the total weight of the starting materials.

13. The dry composition as claimed in one of the preceding claims,
**characterized in that** the at least one organic polymer binder is selected from the group consisting of vinyl acetate/ethylene copolymers, copolymers based on vinyl aromatics, in particular formed from styrene and (meth)acrylates, copolymers based on versatic acid vinyl esters, copolymers based on acrylates and optionally methacrylates, in particular pure acrylates.

14. The dry composition as claimed in one of the preceding claims,
**characterized in that** it contains 5.0 to 20.0 % by weight, preferably 8.0-16.0 % by weight, more preferably 8.0 to 14.0 % by weight of the at least one organic polymer binder, with respect to the total weight of the starting materials.

15. The dry composition as claimed in one of the preceding claims,
**characterized in that** it contains pigments and/or flame retardants, wherein the proportion is a maximum of 20 % by weight, preferably a maximum of 15 % by weight, more preferably a maximum of 10 % by weight, with respect to the total weight of the starting materials.

16. The dry composition as claimed in one of the preceding claims,
**characterized in that** it contains further additives, for example preservatives, wetting/dispersing agents, hydrophobic agents and/or fibres, wherein the proportion is a maximum of 5.0 % by weight with respect to the total weight of the starting materials.

17. A pasty coating composition for forming an intermediate and/or finishing coat in an acoustic system, containing a dry composition as claimed in one of the preceding claims as well as water.

18. An acoustic system comprising at least one panel, in particular an acoustic panel, as well as a dry composition as claimed in one of claims 1 to 16.

## Revendications

1. Composition sèche, destinée à la fabrication d'une masse de revêtement pâteuse en vue de créer un revêtement intermédiaire et / ou un revêtement de finition dans un système acoustique, contenant des agents de charge sablonneux et / ou granuleux, au moins un liant polymère organique, des agents moussants, additifs rhéologiques, notamment des agents épaississants, au moins un polymère gonflable, ainsi que des additifs usuels.

2. Composition sèche selon la revendication 1, **caractérisée en ce que** des tensio-actifs anioniques, de préférence sur la base de dérivés d'acide gras, par exemple de lauryle éther sulfates ou de sulfonates d'oléine , et / ou des tensio-actifs non ioniques, des préférence des éthoxylates d'alcool gras sont contenus en tant qu'agents moussants.

3. Composition sèche selon la revendication 1 ou 2, **caractérisée en ce que** de 0,02 à 0,5 % en poids, de préférence de 0,02 à 0,3 % en poids, de préférence par ailleurs, de 0,04 à 0,1 % en poids des agents moussants, rapportés au poids total des substances de départ sont contenus.

4. Composition sèche selon l'une quelconque des revendications précédentes, **caractérisée en ce que** des agents épaississants moussants, notamment des éthers cellulosiques et / ou des agents épaississants stabilisateurs de mousse, notamment un polyacrylamide sont contenus en tant qu'additifs rhéologiques.

5. Composition sèche selon l'une quelconque des revendications précédentes, **caractérisée en ce que** de 0,05 à 1,0 % en poids, de préférence de 0,1 à 0,6 % en poids, de préférence par ailleurs, de 0,1 à 0,4 % en poids des additifs rhéologiques, rapportés au poids total des substances de départ sont contenus.

6. Composition sèche selon l'une quelconque des revendications précédentes, **caractérisée en ce que** la composition sèche est exempte d'agents antimousse.

7. Composition sèche selon l'une quelconque des revendications précédentes, **caractérisée en ce qu'**un polymère réticulé, sur base d'acrylate, de préférence des sels de sodium partiels réticulés de l'acide polyacrylique sont contenus, en tant que l'au moins un polymère gonflable.

8. Composition sèche selon l'une quelconque des revendications précédentes, **caractérisée en ce que** de 0,05 à 2,5 % en poids, de préférence de 0,1 à 2,0 % en poids, de préférence par ailleurs, de 0,1 à 1,0 % en poids de l'au moins un polymère gonflable, rapportés au poids total des substances de départ sont contenus.

9. Composition sèche selon l'une quelconque des revendications précédentes, **caractérisée en ce que** agents de charge sablonneux et / ou granuleux sont sélectionnés dans le groupe composé des agents de charge silicatés, carbonés, oxydiques, hydroxydiques et / ou des agents de charge légers sont contenus en tant qu'agents de charge sablonneux et / ou granuleux.

10. Composition sèche selon l'une quelconque des revendications précédentes, **caractérisée en ce que** die les agents de charge sablonneux et / ou granuleux comportent une surface à pores ouverts et / ou sont hydrophobes et / ou réglés à propriété hydrophobe.

11. Composition sèche selon l'une quelconque des revendications précédentes, **caractérisée en ce que** la taille moyenne des particules D50 des agents de charge sablonneux et / ou granuleux contenus s'élève à de 100 à 500 um, de préférence à de 200 à 500 µm, de préférence par ailleurs à de 250 à 450 µm.

12. Composition sèche selon l'une quelconque des revendications précédentes, **caractérisée en ce que** de 60,0 à 90,0 % en poids, de préférence 70,0 à 85,0 % en poids, de préférence par ailleurs, de 75,0 à 85,0 % en poids des agents de charge sablonneux et / granuleux, rapportés au poids total des substances de départ sont contenus.

13. Composition sèche selon l'une quelconque des revendications précédentes, **caractérisée en ce que** l'au moins un liant polymère organique est sélectionné dans le groupe constitué des copolymères d'acétate de vinyle / d'éthylène, des copolymères sur base de vinylaromatiques, constitués notamment de styrène et de (méth)acrylates, des copolymères sur d'esters vinyliques d'acide versatique, de copolymère sur base d'acrylates et le cas échéant de méthacrylates, notamment d'acrylates purs.

14. Composition sèche selon l'une quelconque des revendications précédentes, **caractérisée en ce que** de 5,0 à 20,0 % en poids, de préférence de 8,0 à 16,0 % en poids, de préférence par ailleurs, de 8,0 à 14,0 % en poids de l'au moins un liant polymère organique, rapportés au poids total des substances de départ sont contenus.

15. Composition sèche selon l'une quelconque des revendications précédentes, **caractérisée en ce que** des pigments et / ou des retardateurs de flamme sont contenus, la part s'élevant au maximum à 20 % en poids, de préférence au maximum à 15 % en poids, de préférence par ailleurs, au maximum à 10 % en poids, rapportés au poids total des substances de départ.

16. Composition sèche selon l'une quelconque des revendications précédentes, **caractérisée en ce que** des additifs supplémentaires, par exemple des agents conservateurs, des agents réticulants et / ou des agents dispersants, des agents d'hydrophobisation et / ou des fibres sont contenus, la part s'élevant au maximum à 5,0 % en poids, rapportés au poids total des substances de départ.

17. Masse de revêtement pâteuse, destinée à créer un revêtement intermédiaire et / ou un revêtement de finition dans un système acoustique, contenant une composition sèche selon l'une quelconque des revendications précédentes, ainsi que de l'eau.

18. Système acoustique, comprenant au moins un panneau, notamment un panneau acoustique, ainsi qu'une composition sèche selon l'une quelconque des revendications 1 à 16.
